# EUROPEAN PATENT APPLICATION

(11) **EP 2 662 239 A1**
(43) Date of publication of application: **13.11.2013**
(21) Application number: 13166818.8
(22) Date of filing: 07.05.2013
(51) Int. Cl.: B60N 3/06

(54) **Ottoman device**

(30) Priority: 09.05.2012 JP 2012107854
(71) Applicant: AISIN SEIKI KABUSHIKI KAISHA, Kariya-shi, Aichi-ken 448-8650 (JP)
(72) Inventor: Yamada, Yukifumi, Kariya-shi, Aichi-ken 448-8650 (JP); Goto, Naoki, Kariya-shi, Aichi-ken 448-0027 (JP)
(74) Representative: Intès, Didier Gérard André

(57) **Abstract**

An ottoman device (21) includes an ottoman (20), a link mechanism (22) supporting the ottoman (20) and configured to selectively move the ottoman (20) to a deployed position and a retracted position, and a base bracket (23) configured to support the link mechanism (22) to a front edge (2a) of a vehicle seat (1), the base bracket (23) being configured to be fixed to a front edge portion (11f) of a cushion frame (11) of the vehicle seat (1) and to a side slide rail (12) which is provided to be movable integrally with the cushion frame (11) in a width direction and which is positioned below the front edge portion (11f) to support the cushion frame (11).

## Description

### TECHNICAL FIELD

This disclosure generally relates to an ottoman device.

### BACKGROUND DISCUSSION

A known ottoman device includes a link mechanism supporting an ottoman and a base bracket supporting the link mechanism to a front edge of a seat. The known ottoman device is configured to move (deploy) the ottoman forward relative to the seat and retract the ottoman toward the seat in accordance with an operation of the link mechanism.

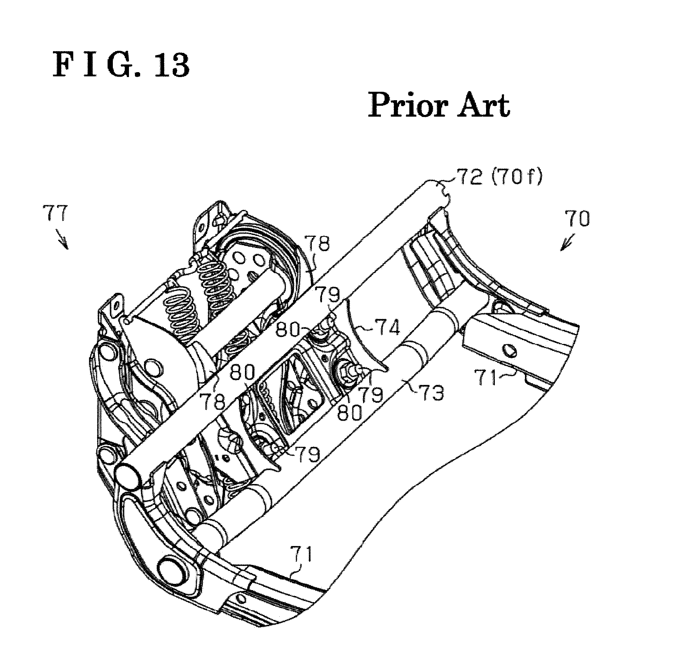

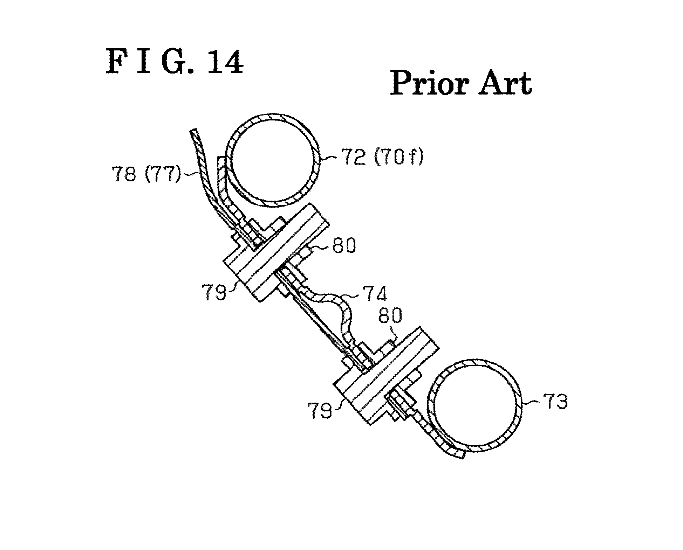

For example, as in a case illustrated in Figs. 13 and 14, a cushion frame 70 configuring a structure of a seat includes side frames 71 at right and left sides of the seat and a connecting member 72 formed in a pipe and arranged between the side frames 71. In addition, an auxiliary connecting member 73 formed in a pipe similar to the connecting member 72 is positioned between the side frames 71 and is arranged below the connecting member 72, i.e., below a front edge portion 70f of the cushion frame 70, so as to be substantially in parallel with the connecting member 72. Further, base brackets 78 of a known ottoman device 77 are fixed to a fixing bracket 74 having a planar shape and fixed to the connecting member 72 and the auxiliary connecting member 73 by means of bolts 79 and nuts 80.

Moreover, in an example of a known ottoman device disclosed in JP2006-239145A (which will be hereinafter referred to as Reference 1), a cushion frame is supported via respective support brackets by slide rails so to be arranged on the slide rails. Base brackets (base members) of the ottoman device are supported by the respective support brackets so as to extend across a front edge portion of the cushion frame in a front and rear direction thereof. Further, the base brackets are fixed to the support brackets in a manner that the front edge portion is positioned between the base brackets and the support brackets.

According to the case illustrated in Figs. 13 and 14, the cushion frame 70 supporting a load of the seat requires strength for exerting a desired function thereof to support the seat. The strength of the cushion frame 70 may be secured by the side frames 71 and the connecting member 72. Therefore, in a case where a manufacturing cost restriction or a weight reduction is taken into consideration, it is appropriate that an additional structure or member, for example, the auxiliary connecting member 73, for attaching the known ottoman device 77 to the cushion frame 70 may be eliminated.

According to Reference 1, the base brackets of the ottoman device are integrally fixed to the front edge portion of the cushion frame; thereby, the number of components and assembling hours may be reduced. However, according to the configuration of the ottoman device disclosed in Reference 1, an input load relative to an ottoman is concentrated around the front edge portion of the cushion frame. In addition, in a case where strength of the cushion frame is increased in order to resist against a torsional or bending moment caused by the input load concentrated around the front edge portion of the cushion frame, problems of increases of manufacturing costs and the weight of the ottoman device may occur.

A need thus exists for an ottoman device, which is simply configured to surely support the ottoman device to a front edge of a seat.

### SUMMARY

According to an aspect of this invention, an ottoman device includes an ottoman, a link mechanism supporting the ottoman and configured to selectively move the ottoman to a deployed position and a retracted position, and a base bracket configured to support the link mechanism to a front edge of a vehicle seat, the base bracket being configured to be fixed to a front edge portion of a cushion frame of the vehicle seat and to a side slide rail which is provided to be movable integrally with the cushion frame in a width direction and which is positioned below the front edge portion to support the cushion frame.

According to the aforementioned configuration of the ottoman device, fixed portions of the base bracket may be provided at positions separated from each other in an upper and lower direction, without an additional structure. Therefore, a load of the ottoman, applied via the link mechanism to the base bracket, may be received by the fixed portions provided at the positions separated in the upper and lower direction; thereby, a torsional or bending moment generated at the fixed portions may be minimized or restricted. As a result, the ottoman device is simply configured to be surely supported to the front edge of the vehicle seat.

In addition, the side slide rail moves integrally with the cushion frame in the width direction. Therefore, a function of a seat slide apparatus configured by the side slide rail may not be deteriorated because of the fixation of the base bracket.

According to another aspect of the invention, the ottoman device further includes a first fixing bracket arranged at the front edge portion of the cushion frame and fixed to the base bracket, and a second fixing bracket arranged at the side slide rail and fixed to the base bracket.

According to the aforementioned configuration, appropriate assemblability and processability of the ottoman device may be obtained.

According to still another aspect of the invention, the first fixing bracket and the second fixing bracket include fastening portions to which the base bracket is fixable from one direction.

According to the aforementioned configuration, the further appropriate assemblability of the ottoman device may be obtained.

According to a further aspect of the invention, a fastening portion is arranged at one of the first fixing bracket and the second fixing bracket and is fixed to the base bracket by fastening. An engagement structure portion is arranged at the other of the first fixing bracket and the second fixing bracket and is fixed to the base bracket by engagement between an engagement portion and an engaged portion.

According to the aforementioned configuration, the number of components and assembling hours of the ottoman device are reduced, therefore reducing manufacturing costs. In addition, the further appropriate assemblability of the ottoman device may be obtained.

According to another aspect of the invention, the other of the first fixing bracket and the second fixing bracket to which the base bracket is fixed by engagement includes a planar portion extending toward one of the first fixing bracket and the second fixing bracket to which the base bracket is fixed by fastening. The planar portion includes an engagement hole engaged with an engagement pawl by insertion of the engagement pawl into the engagement hole, the engagement pawl being formed at an end of the base bracket.

According to the aforementioned configuration, the base bracket may be surely fixed to the first and second fixing brackets while the appropriate assemblability of the ottoman device may be obtained.

According to still another aspect of the invention, the ottoman device further includes a second engagement portion. The engagement pawl inserted into the engagement hole is arranged between the second engagement portion and the planar portion.

According to the aforementioned configuration, the engagement between the engagement hole and the engagement pawl is restricted from being loosened because of the torsional or bending moment generated by the load of the ottoman. As a result, the ottoman device may be surely fixed to the cushion frame while the appropriate assemblability of the ottoman device may be secured.

### BRIEF DESCRIPTION OF THE DRAWINGS

The foregoing and additional features and characteristics of this invention will become more apparent from the following detailed description considered with the reference to the accompanying drawings, wherein:

Fig. 1 is a perspective view of a seat provided with an ottoman device disclosed here;

Fig. 2 is a side view of the seat provided with the ottoman device disclosed here;

Fig. 3 is a configuration diagram schematically illustrating the ottoman device disclosed here;

Fig. 4 is a side view of a fixing structure of the ottoman device according to a first embodiment disclosed here;

Fig. 5 is a plain view of the fixing structure of the ottoman device according to the first embodiment disclosed here;

Fig. 6 is a perspective view of the fixing structure of the ottoman device according to the first embodiment disclosed here;

Fig. 7 is a cross-sectional view taken along the line VII-VII in Fig. 5 and illustrating the ottoman device according to the first embodiment disclosed here;

Fig. 8 is a plain view of the fixing structure of the ottoman device according to a second embodiment disclosed here;

Fig. 9 is a perspective view of the fixing structure of the ottoman device according to the second embodiment disclosed here;

Fig. 10 is a cross-sectional view taken along the line X-X in Fig. 8 and illustrating the ottoman device according to the second embodiment disclosed here;

Fig. 11 is a cross-sectional view of the fixing structure of the ottoman device according to a first modified example of the first and second embodiments disclosed here;

Fig. 12 is a cross-sectional view of the fixing structure of the ottoman device according to a second modified example of the first and second embodiments disclosed here;

Fig. 13 is a perspective view of a fixing structure of a known ottoman device; and

Fig. 14 is a cross-sectional view of the fixing structure of the known ottoman device.

### DETAILED DESCRIPTION

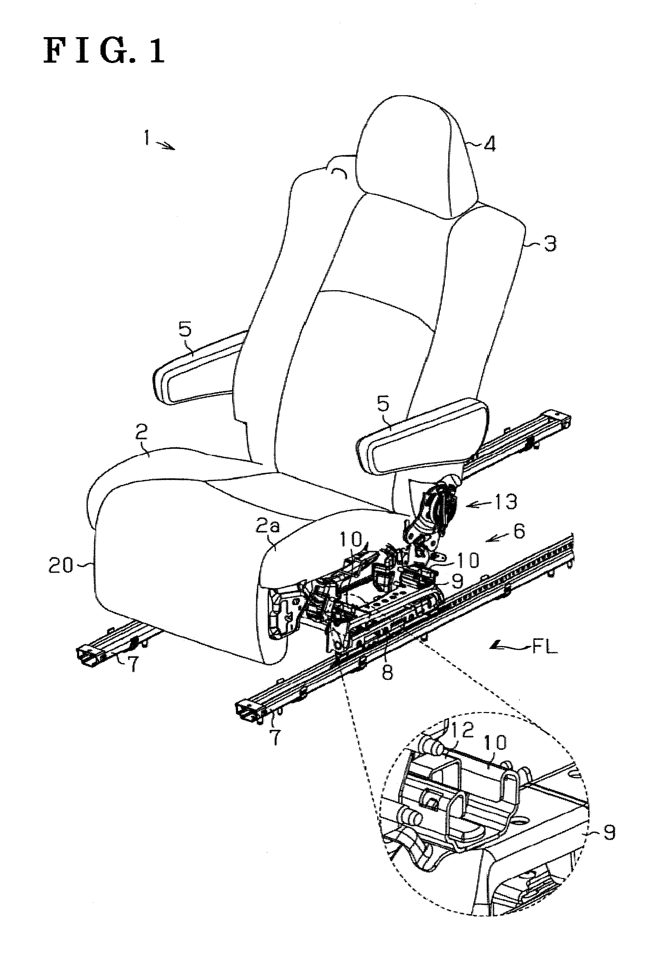

A first embodiment of this invention will be described as follows with reference to the attached drawings. As illustrated in Fig. 1, a seat 1 (i.e., a vehicle seat) for a vehicle includes a seat cushion 2 and a seat back 3 provided at a rear end portion of the seat cushion 2 so as to tilt relative to the seat cushion 2. Further, a headrest 4 is arranged at an upper end of the seat back 3. Furthermore, a pair of armrests 5 is arranged at side ends of the seat back 3 in a width direction thereof.

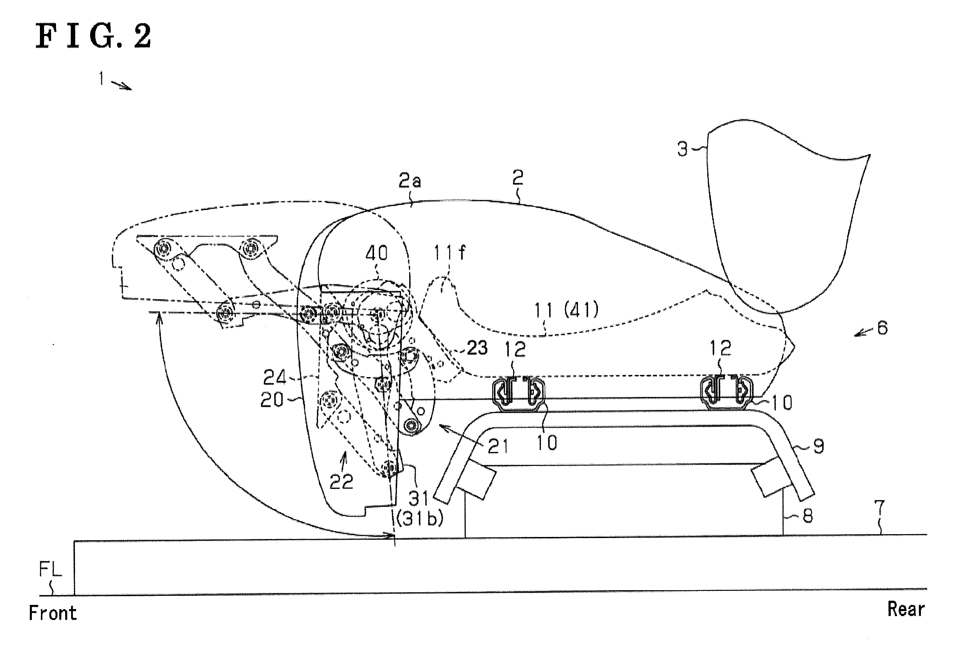

As illustrated in Figs. 1 and 2, the seat 1 is supported via a seat slide apparatus 6 by a floor portion FL of the vehicle and is arranged on the floor portion FL. An occupant of the vehicle uses a function of the seat slide apparatus 6 to thereby adjust a position of the seat 1.

In particular, a pair of lower rails 7 extending in a front and rear direction of the vehicle (a right and left direction in Fig. 2) is arranged at the floor portion FL in parallel with each other. Upper rails 8 are movably attached to the lower rails 7, respectively. Support brackets 9 are arranged on the upper rails 8, respectively, so as to be fixed thereto. Second lower rails 10 extending in a width direction of the vehicle (in a direction perpendicular to a horizontal direction in Fig. 2) are arranged at front end portions and rear end portions of the support brackets 9 so as to extend between the front end portions and between the rear end portions. A cushion frame 11 configuring a structure of the seat 1 is positioned on second upper rails 12 so as to be fixed to the second upper rails 12 movably mounted to the second lower rails 10, respectively.

That is, the seat 1 (the seat cushion 2) moves in the front and rear direction together with the respective support brackets 9 arranged on the upper rails 8, the second lower rails 10, and the second upper rails 12 in accordance with a relative movement of the upper rails 8 to the lower rails 7. In addition, the seat 1 moves in the width direction together with the second upper rails 12 in accordance with a relative movement of the second upper rails 12 to the second lower rails 10. Thus, the seat slide apparatus 6 according to the first embodiment is configured to adjust a position of the seat 1 in the front and rear direction and the width direction.

In addition, as illustrated in Fig. 1, a seat reclining apparatus 13 is arranged between the seat cushion 2 and the seat back 3. The seat reclining apparatus 13 is configured to restrict and allow a relative movement of the seat back 3 to the seat cushion 2. The occupant of the vehicle uses a function of the seat reclining apparatus 13 to thereby adjust a tilt angle of the seat back 3.

As illustrated in Fig. 2, the seat 1 of the first embodiment further includes an ottoman 20 arranged at a front edge 2a of the seat cushion 2 and an ottoman device 21. The ottoman device 21 is configured to move (deploy) the ottoman 20 forward relative to the seat 1 (the seat cushion 2) and to retract the ottoman 20 toward the front edge 2a of the seat cushion 2. The occupant uses a function of the ottoman device 21 to thereby adjust a deployed position of the ottoman 20.

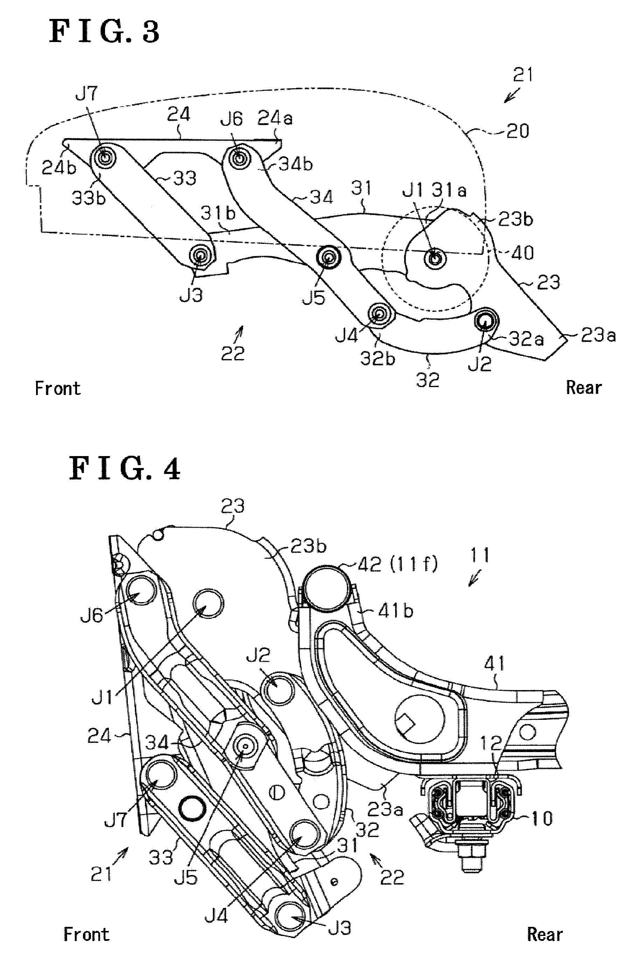

In particular, as illustrated in Figs. 3 to 5, the ottoman device 21 includes a bilateral pair of link mechanisms 22 in the width direction. First and second ends of each of the link mechanisms 22 are connected to a base bracket 23 and a support bracket 24, respectively. In other words, as illustrated in Figs. 2 and 4, the base bracket 23 is fixed to a front edge portion 11f of the cushion frame 11 configuring a frame of the seat cushion 2 (i.e., the frame corresponding to the structure of the seat 1); thereby, the link mechanism 22 is provided so as to be supported to the front edge 2a of the seat cushion 2. Therefore, the ottoman device 21 may support the ottoman 20, which is fixed to the support brackets 24 at right and left sides of the ottoman device 21, in a state where the ottoman 20 is positioned forward relative to the seat 1.

As illustrated in Fig. 3, the link mechanism 22 includes fist and second rotational links 31 and 32. The first rotational link 31 is connected to the base bracket 23 so as to rotate around a first joint J1 arranged at a first end 31a of the first rotational link 31. The second rotational link 32 is connected to the base bracket 23 so as to rotate around a second joint J2 arranged at a first end 32a of the second rotational link 32.

The link mechanism 22 further includes first and second pivotal links 33 and 34. The first pivotal link 33 is connected to the first rotational link 31 so as to pivot around a third joint J3 arranged at a second end 31b of the first rotational link 31. The second pivotal link 34 is connected to the second rotational link 32 so as to pivot around a fourth joint J4 arranged at a second end 32b of the second rotational link 32.

The second pivotal link 34 is further connected to the first rotational link 31 so as to pivot around a fifth joint J5 arranged between the first joint J1 and the third joint J3 that are arranged at the first end 31a and the second end 31b, respectively, of the first rotational link 31. The second pivotal link 34 is furthermore connected to a rear end portion 24a of the support bracket 24 so as to pivot around a sixth joint J6 arranged at an end 34b of the second pivotal link 34. The first pivotal link 33 is connected to a front end portion 24b of the support bracket 24 so as to pivot around a seventh joint J7 arranged at an end 33b of the first pivotal link 33.

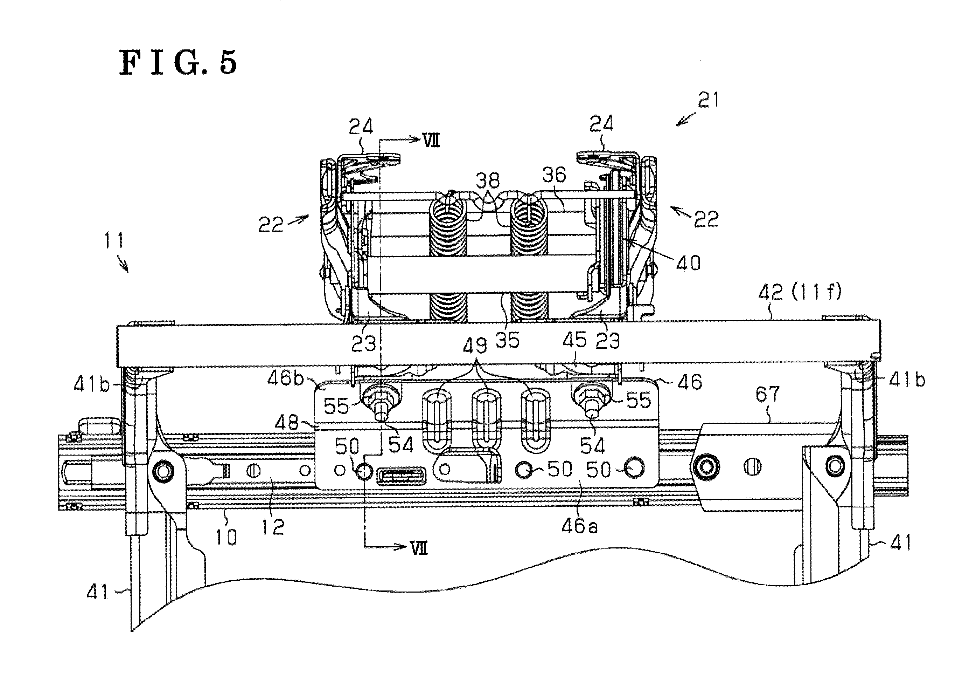

As described above, each of the link mechanisms 22 according to the first embodiment is configured to include a so-called pantograph link in which the respective links 31, 32, 33, and 34 are rotatably connected to one another. As illustrated in Fig. 5, connecting bars 35 and 36 are arranged between the bilateral pair of link mechanisms 22 in the width direction so that the link mechanisms 22 integrally operate. The connecting bar 35 connects the first ends 31a of the first rotational links 31 in the width direction while the connecting bar 36 connects the second ends 31b of the first rotational links 31 in the width direction. In accordance with the operation of the link mechanisms 22, the ottoman device 21 of the first embodiment is configured to move the ottoman 20, which is supported by the respective second ends of the link mechanisms 22, forward relative to the seat 1 and to retract the ottoman 20 toward the front edge 2a of the seat cushion 2.

In particular, as illustrated in Fig. 2, each of the link mechanisms 22 is configured to rotate the first rotational link 31 (in a clockwise direction in Fig. 2) in a manner that the second end 31b of the first rotational link 31 is lifted upward, thereby moving the ottoman 20 to the deployed position in which the ottoman 20 is deployed forward relative to the seat 1. Meanwhile, the link mechanism 22 is configured to rotate the first rotational link 31 (in a counter clockwise direction in Fig. 2) in a manner that the second end 31b of the first rotational link 31 is lifted down, thereby retracting the ottoman 20 to a retracted position in which the ottoman 20 is positioned adjacent to the front edge 2a of the seat cushion 2.

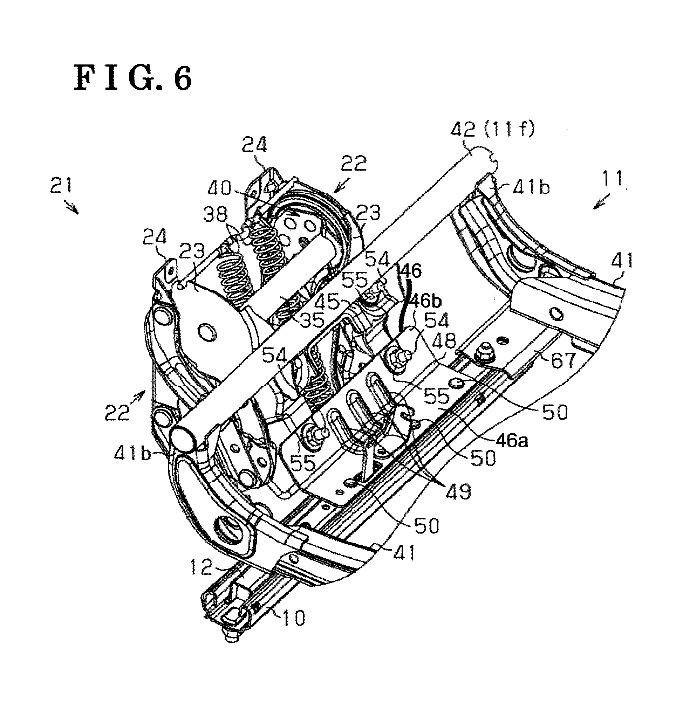

Further, according to the first embodiment, as illustrated in Figs. 5 and 6, the link mechanisms 22 are biased toward the deployed position by the biasing force of respective coil springs 38. A lock mechanism 40 which may restrict the first rotational link 31 from rotating is formed at the first joint J1 about which the base bracket 23 and the first rotational link 31 (the first end 31a) are rotatably connected to each other. The ottoman device 21 of the first embodiment operates the lock mechanism 40 to shift the lock mechanism 40 between a locked state in which the rotation of the first rotational link 31 is restricted and an unlocked state in which the rotation of the first rotational link 31 is allowed; therefore, the ottoman 20 is deployed forward relative to the seat 1 and the deployed position of the ottoman 20 may be adjusted.

In other words, the lock mechanism 40 is released from the locked state to allow the rotation of the first rotational link 31; thereby, the link mechanism 22 moves in a deploying direction of the ottoman 20 by the biasing force (spring force) of the coil spring 38. Meanwhile, in order to move the link mechanism 22 in a retracting direction of the ottoman 20, a load is inputted to the ottoman 20 against the spring force; thereby, the lock mechanism 40 is again brought into the locked state; therefore, the ottoman 20 may be arranged at a desired position.

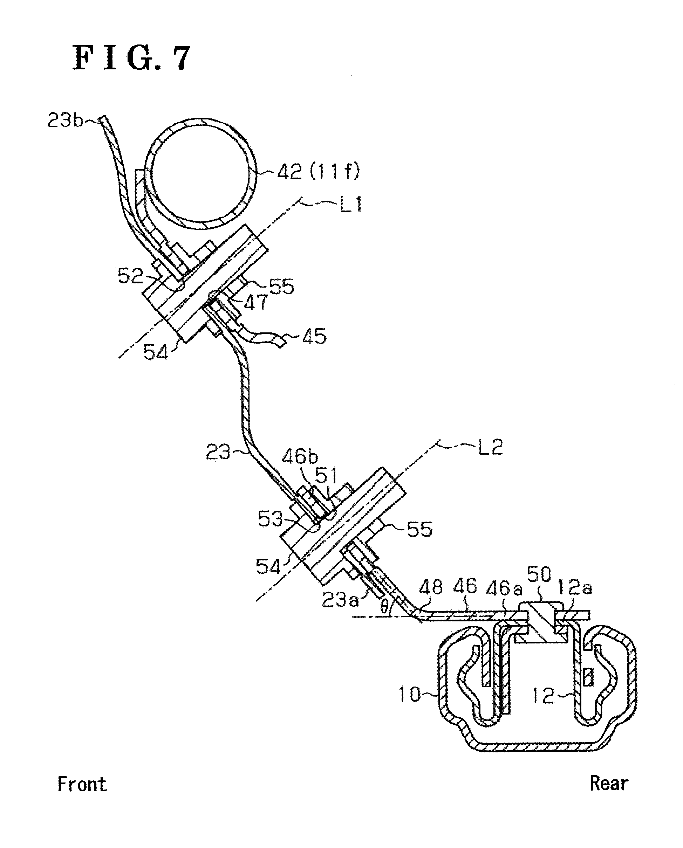

Next, a fixing structure of the ottoman device 21 according to the first embodiment will be explained as follows with reference to Figs. 4 to 6. According to the first embodiment, a connecting member 42 formed in a pipe is fixed to front end portions 41b of side frames 41 so as to extend between the side frames 41 arranged at right and left sides of the cushion frame 11 and extending in the front and rear direction of the vehicle (in a right and left direction in Fig. 4); thereby, the cushion frame 11 configuring the structure of the seat 1 is formed. In particular, the connecting member 42 is welded to the front end portions 41b of the side frames 41. In addition, as illustrated in Fig. 7, a first fixing bracket 45 for fixing the ottoman device 21 is arranged at the connecting member 42.

Further, according to the first embodiment, as illustrated in Figs. 5 to 7, a second fixing bracket 46 for fixing the ottoman device 21 is arranged at the second upper rail 12 which is positioned below the connecting member 42 (at a lower side in Fig. 7) to support the cushion frame 11 in a manner that the cushion frame 11 slides in the width direction. Each of the base brackets 23 (of the link mechanisms 22) of the ottoman device 21 is fixed via the first fixing bracket 45 to the connecting member 42 configuring the front edge portion 11f of the cushion frame 11 and is fixed via the second fixing bracket 46 to the second upper rail 12 serving as a side slide rail.

According to the first embodiment, a metallic plate is processed to form the first fixing bracket 45 and the first fixing bracket 45 is fixed to the connecting member 42 by welding. In addition, bolt insertion holes 47 (fastening portions) for fixing the bilateral pair of link mechanisms 22 in the width direction are arranged at the first fixing bracket 45.

A planar plate is bent substantially into an L-shape to therefore form the second fixing bracket 46 including an outer profile of the L-shape. A metallic plate is processed to form the second fixing bracket 46 and plural ribs 49 (see Figs. 5 and 6) are formed at the second fixing bracket 46. The plural ribs 49 extend along a short side of the second fixing bracket 46, i.e., along a direction perpendicular to a direction in which a bent portion 48 of the second fixing bracket 46 linearly extends (i.e., the bent portion 48 extends along a long side of the second fixing bracket 46). A first end 46a of the second fixing bracket 46 in the direction of the short side thereof (i.e., an end portion of the second fixing bracket 46, which is at a lower side in Fig. 5) is fixed to the second upper rail 12 in a manner that the bent portion 48 extending linearly along the long side of the second fixing bracket 46 is substantially parallel to a direction in which the second upper rail 12 extends.

In addition, according to the first embodiment, the second upper rail 12 includes a body portion 12a having a convex portion substantially formed in a cross-sectional U-shape which projects toward an upper side in Fig. 7. The second upper rail 12 is movably attached to the second lower rail 10. The second fixing bracket 46 is fixed by rivets 50 to the body portion 12a of the second upper rail 12.

The second fixing bracket 46 includes a second end 46b provided in a manner that the bent portion 48 is arranged between the first end 46a and the second end 46b. Bolt insertion holes 51 (fastening portions) are arranged at the second end 46b of the second fixing bracket 46 and are provided at positions which correspond to respective positions of the bolt insertion holes 47 of the first fixing bracket 45 in the width direction. A bolt insertion hole 52 corresponding to the position of each of the bolt insertion holes 47 of the first fixing bracket 45 is formed at each of the base brackets 23 of the ottoman device 21. In addition, a bolt insertion hole 53 corresponding to the position of each of the bolt insertion holes 51 of the second fixing bracket 46 is arranged at each of the base brackets 23.

In particular, according to the first embodiment, the base bracket 23 is fixed by one pair of a bolt 54 and a nut 55 to the first fixing bracket 45 and is fixed by another pair of the bolt 54 and the nut 55 to the second fixing bracket 46. Here, according to the first embodiment, as illustrated in Fig. 7, a bent angle θ of the bent portion 48 of the second fixing bracket 46 is designed so that an axial line L2 of the bolt insertion hole 51 of the second fixing bracket 46 is substantially parallel to an axial line L1 of the bolt insertion hole 47 of the first fixing bracket 45. Therefore, the bolts 54 and the nuts 55 both serving as fastener members are attachable and detachable in the same direction with respect to the bolt insertion hole 47 and the bolt insertion hole 52 and with respect to the bolt insertion hole 51 and the bolt insertion hole 53, that is, the base bracket 23 may be fixed to the first fixing bracket 45 and the second fixing bracket 46 from the same direction.

Next, functions of the fixing structure of the ottoman device 21 including the aforementioned configuration will be described below. An input load to move the ottoman 20 downward generates a torsional or bending moment to fixed portions of the base bracket 23. According to the fixing structure of the ottoman device 21 of the first embodiment, a load (i.e., the input load) of the ottoman 20, which is applied to the base bracket 23, is received by both the first and second fixing brackets 45 and 46 which are provided in a separated manner in an upper and lower direction as seen in Fig. 7. Therefore, the aforementioned torsional or bending moment generated at the fixed portions of the base bracket 23 relative to the first and second fixing brackets 45 and 46 may be minimized or restricted.

In addition, according to the first embodiment, the second fixing bracket 46 is arranged at the existing second upper rail 12; thereby, the aforementioned fixed portions of the base bracket 23 may be provided at positions separated from each other in the upper and lower direction without an additional structure. Moreover, the second upper rail 12 moves in the width direction together with the cushion frame 11 at which the first fixing bracket 45 is arranged; therefore, a function of the seat slide apparatus 6 configured by the second lower rail 10 and the second upper rail 12 may not be deteriorated.

As described above, according to the first embodiment, the following effects may be obtained. The ottoman device 21 of the first embodiment includes the link mechanisms 22, the second ends of which support the ottoman 20, and the base brackets 23 supporting the link mechanisms 22 to the front edge 2a of the seat cushion 2. The first fixing bracket 45 is arranged at the front edge portion 11f (the connecting member 42) of the cushion frame 11 configuring the structure of the seat 1. The second fixing bracket 46 is arranged at the second upper rail 12 which is provided to be movable together with the cushion frame 11 in the width direction while being positioned below the front edge portion 11f to support the cushion frame 11. Each of the base brackets 23 is fixed via the first fixing bracket 45 to the connecting member 42 configuring the front edge portion 11f and is fixed via the second fixing bracket 46 to the second upper rail 12 serving as the side slide rail.

According to the configuration of the ottoman device 21 of the first embodiment, the fixed portions of the base bracket 23 may be provided at the positions separated in the upper and lower direction, without an additional structure. Therefore, the load of the ottoman 20, which is applied via the link mechanism 22 to the base bracket 23, is received by the first fixing bracket 45 and the second fixing bracket 46; thereby, the torsional or bending moment generated at the fixed portions of the base bracket 23 may be minimized or restricted. As a result, the ottoman device 21 may be simply configured to be fixedly supported to the front edge 2a of the seat cushion 2. The fixing structure for fixing the base bracket 23 via the first fixing bracket 45 to the connecting member 42 and via the second fixing bracket 46 to the second upper rail 12 is applied in the first embodiment and thus appropriate assemblability and processability of the base bracket 23 may be secured.

According to the configuration of the ottoman device 21 of the first embodiment, the base bracket 23 may be fixed to the first fixing bracket 45 and the second fixing bracket 46 from the same direction, therefore securing the further appropriate assemblability.

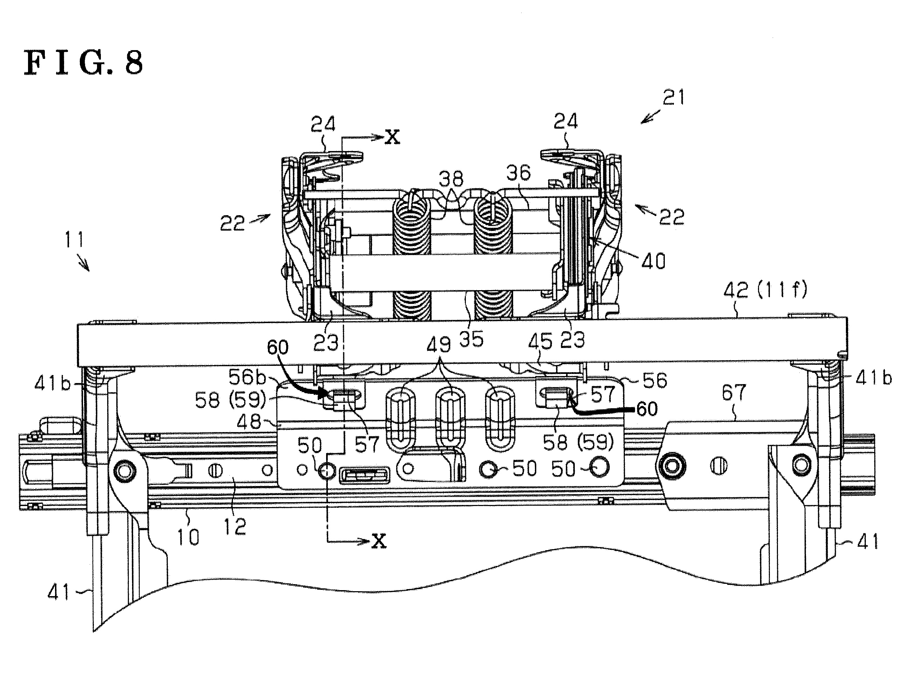

A second embodiment of the ottoman device 21 will be explained as follows with reference to Figs. 8 to 10. In the second embodiment, the same numbers are assigned to components or portions similar to those of the first embodiment and thus explanations of the components or portions will be omitted.

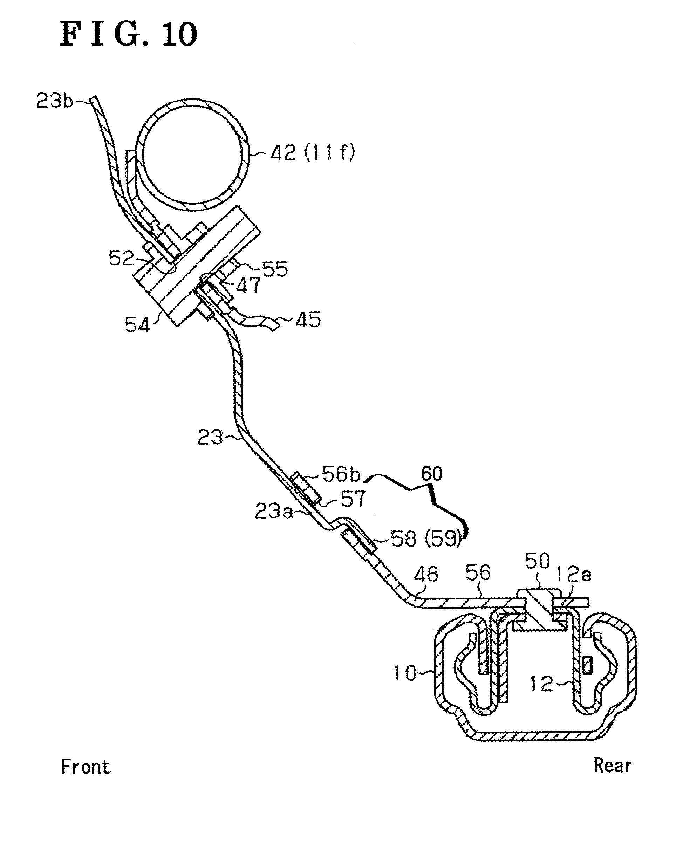

As illustrated in Figs. 8 to 10, the second embodiment differs from the first embodiment in the fixing structure of the ottoman device 21. In particular, according to the second embodiment, a second fixing bracket 56 includes an end portion 56b (i.e., serving as a planar portion) having an outer profile of a planar shape and extending toward the first fixing bracket 45. Instead of the bolt insertion holes 51 of the second fixing bracket 46 of the first embodiment, elongated engagement holes 57 extending in the width direction corresponding to a right and left direction as seen in Fig. 8 are formed in the second fixing bracket 56 of the second embodiment. Engagement pawls 58 each serving as an engagement portion are formed at respective lower ends 23a (i.e., ends or end portions at a lower side in Fig. 10) of the base brackets 23 so as to engage with the engagement holes 57 each serving as an engaged portion. That is, the engagement hole 57 and the engagement pawl 58 configure an engagement structure portion. The engagement pawl 58 includes a planar protrusion 59 protruding toward the lower side. The planar protrusion 59 has a width substantially identical to a hole diameter (a diameter in the width direction) of each of the engagement holes 57. The planar protrusion 59 is cranked so as to conform to a thickness of the second fixing bracket 56, thereby forming the engagement pawl 58. The engagement pawl 58 is engaged with the engagement hole 57 to thereby fix the lower end 23a of each of the base brackets 23 to the second fixing bracket 56.

In other words, as illustrated in Fig. 10, in order to mount the ottoman device 21 to the cushion frame 11, the respective engagement pawls 58 of the base brackets 23 are firstly inserted into the engagement holes 57 of the second fixing bracket 56 in a direction from the first fixing bracket 45 to the second fixing bracket 56 along a direction in which the end portion 56b forming the planar portion of the second fixing bracket 56 extends obliquely downward to a right lower side in Fig. 10. Then, an upper end 23b of each of the base brackets 23 is fixed to the first fixing bracket 45; thereby, the engagement pawl 58 as the engagement portion of the base bracket 23 is engaged with the engagement hole 57 as the engaged portion of the second fixing bracket 56. Therefore, the lower end 23a of the base bracket 23 is fixed to the second fixing bracket 56.

Thus, according to the second embodiment, effects similar to those of the first embodiment may be obtained. In addition, the number of fixed portions in the second embodiment is reduced compared to the first embodiment; therefore, the ottoman device 21 may be further simply configured. Accordingly, the number of components and assembling hours of the ottoman device 21 may be reduced, therefore reducing manufacturing costs and securing the further appropriate assemblability.

The aforementioned first and second embodiments may be modified as follows. According to the first and second embodiments, the connecting member 42 formed in the pipe is fixed to the front end portions 41b of the side frames 41, which are arranged at the right and left sides of the cushion frame 11, so as to extend between the side frames 41, thereby forming the cushion frame 11. Alternatively, the cushion frame 11 may be configured in a different manner.

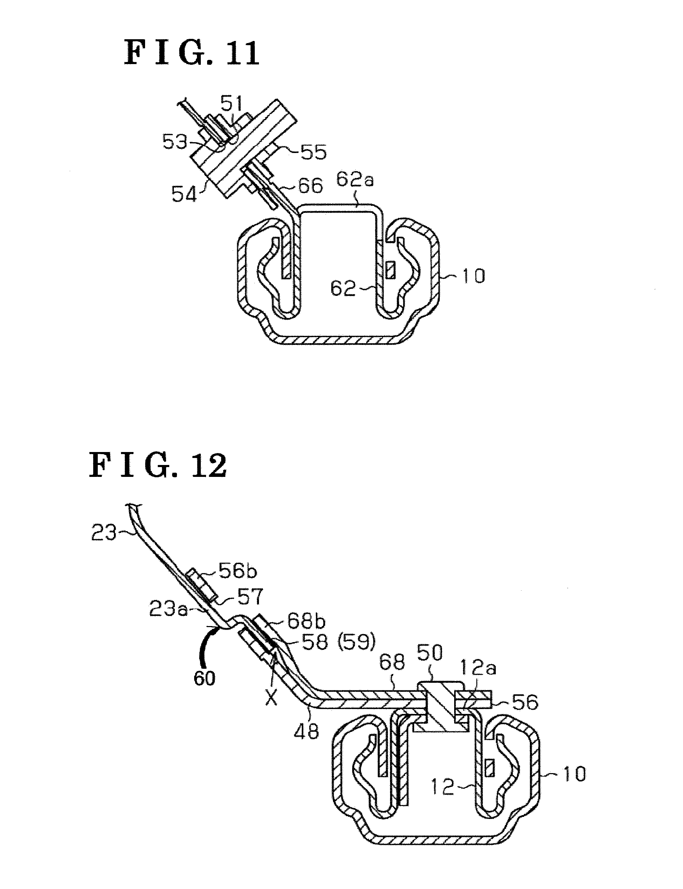

According to the aforementioned first and second embodiments, the second fixing bracket 46, 56 is fixed by the rivets 50 to the second upper rail 12. Alternatively, a method to fix the second fixing bracket 46, 56 to the second upper rail 12 may be modified accordingly. In addition, for example, in a first modified example of the first and second embodiments, as illustrated in Fig. 11, a second fixing bracket 66 may be integrally formed with a second upper rail 62. In particular, according to the first example, a metallic plate is processed by bending to form a body portion 62a of the second upper rail 62 and a portion of the metallic plate forming the body portion 62a is bent upward (in Fig. 11) to form the second fixing bracket 66. Therefore, the configuration of the ottoman device 21 may be further simplified.

Further, the first and second embodiments may be modified as follows. For example, in a case where an additional component is already fixed to the second upper rail 12, the additional component may be configured to function as the second fixing bracket 46, 56. Therefore, the ottoman device 21 may be surely fixed to the cushion frame 11 without increasing the number of components. In addition, the ottoman device 21 may be easily processed.

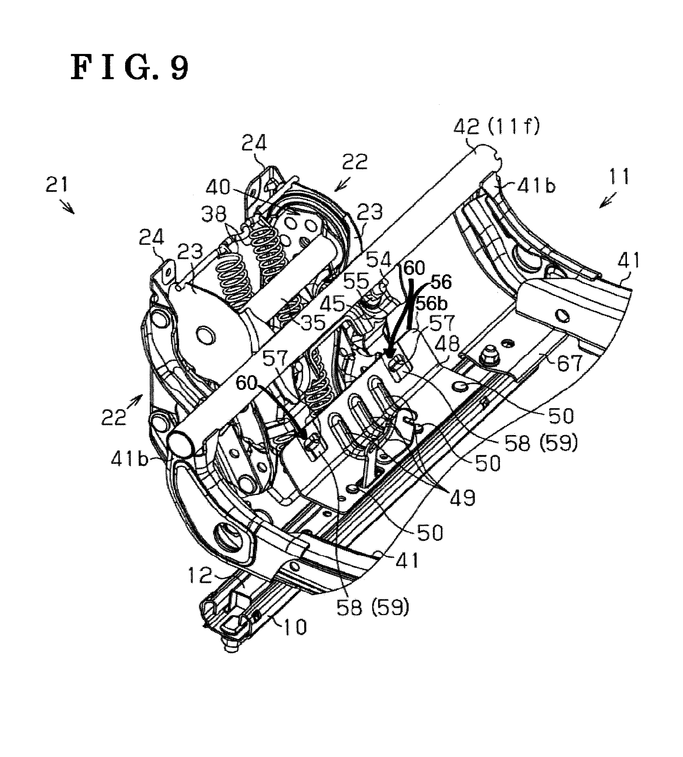

The aforementioned additional component (or an additional structure) is, for example, a retaining plate 67 (see Figs. 6 and 9) for restricting the relative movement of the second upper rail 12 to the second lower rail 10 in the upper and lower direction so as not to loosen the second upper rail 12 from the second lower rail 10.

According to the second embodiment, the base bracket 23 is fixed to the first fixing bracket 45 by fastening and is fixed to the second fixing bracket 56 by engagement between the engagement portion and the engaged portion. Alternatively, the base bracket 23 may be fixed to the second fixing bracket 56 by fastening and may be fixed to the first fixing bracket 45 by engagement between an engagement portion and an engaged portion.

Further, according to the second embodiment, the engagement pawl 58 serving as the engagement portion is formed at the lower end 23a of the base bracket 23 and the engagement hole 57 serving as the engaged portion is formed at the end portion 56b of the second fixing bracket 56. Alternatively, the engagement portion and the engaged portion may be configured in a different manner from the configurations of the second embodiment.

Furthermore, in a second modified example of the first and second embodiments, as illustrated in Fig. 12, a second engagement portion may be applied so that the engagement pawl 58 inserted in the engagement hole 57 is arranged between the second engagement portion and the end portion 56b serving as the planar portion. For example, a planar member 68 bent substantially into an L-shape in a manner similar to the second fixing bracket 56 is applied as the second engagement portion and is integrally fixed to the second fixing bracket 56. In addition, the planar member 68 is configured so that a clearance X conforming to a thickness of the engagement pawl 58 is formed between the end portion 56b of the second fixing bracket 56 and an end portion 68b of the planar member 68. The engagement pawl 58 inserted in the engagement hole 57 is inserted in the clearance X; thereby, the engagement between the engagement hole 57 and the engagement pawl 58 is restricted from being loosened because of the torsional or bending moment generated by the load of the weight of the ottoman 20. As a result, the ottoman device 21 may be surely fixed to the cushion frame 11 while the appropriate assemblability is secured.

According to the second embodiment, the engagement holes 57 are formed in the second fixing bracket 56 so as to be arranged respectively at right and left sides thereof in the width direction. The number of engagement holes 57 may be changed arbitrarily. For example, in a case where a base bracket usable at each of the right and left sides in the width direction is applied, the number of engagement pawls of the base bracket may be one and the number of engagement holes 57 of the second fixing bracket 56 may be one at each of the right and left sides.

Moreover, the link mechanism 22 and the lock mechanism 40 may be modified arbitrarily.

## Claims

1. An ottoman device (21), comprising:
an ottoman (20);
a link mechanism (22) supporting the ottoman (20) and configured to selectively move the ottoman (20) to a deployed position and a retracted position; and
a base bracket (23) configured to support the link mechanism (22) to a front edge (2a) of a vehicle seat (1), the base bracket (23) being configured to be fixed to a front edge portion (11f) of a cushion frame (11) of the vehicle seat (1) and to a side slide rail (12) which is provided to be movable integrally with the cushion frame (11) in a width direction and which is positioned below the front edge portion (11f) to support the cushion frame (11).

2. The ottoman device (21) according to Claim 1, further comprising:
a first fixing bracket (45) arranged at the front edge portion (11f) of the cushion frame (11) and fixed to the base bracket (23); and
a second fixing bracket (46, 56, 66) arranged at the side slide rail (12) and fixed to the base bracket (23).

3. The ottoman device (21) according to Claim 2, wherein the first fixing bracket (45) and the second fixing bracket (46) include fastening portions (47, 51) to which the base bracket (23) is fixable from one direction.

4. The ottoman device (21) according to Claim 2, wherein a fastening portion (47, 51) is arranged at one of the first fixing bracket (45) and the second fixing bracket (46, 56) and is fixed to the base bracket (23) by fastening, and
wherein an engagement structure portion (57, 58) is arranged at the other of the first fixing bracket (45) and the second fixing bracket (46, 56) and is fixed to the base bracket (23) by engagement between an engagement portion (58) and an engaged portion (57).

5. The ottoman device (21) according to Claim 4, wherein the other of the first fixing bracket (45) and the second fixing bracket (56) to which the base bracket (23) is fixed by engagement includes a planar portion (56b) extending toward one of the first fixing bracket (45) and the second fixing bracket (56) to which the base bracket (23) is fixed by fastening, and the planar portion (56b) includes an engagement hole (57) engaged with an engagement pawl (58) by insertion of the engagement pawl (58) into the engagement hole (57), the engagement pawl (58) being formed at an end (23a) of the base bracket (23).

6. The ottoman device (21) according to Claim 5, further comprising a second engagement portion (68), wherein the engagement pawl (58) inserted into the engagement hole (57) is arranged between the second engagement portion (68) and the planar portion (56b).
